# NEUE EUROPÄISCHE PATENTSCHRIFT

(11) **EP 1 831 582 B2**
(45) Veröffentlichungstag und Bekanntmachung des Hinweises auf die Entscheidung über den Einspruch: **02.10.2013**
(45) Hinweis auf die Patenterteilung: 03.12.2008
(21) Anmeldenummer: 05820715.0
(22) Anmeldetag: 22.11.2005
(51) Int. Cl.: F16F 9/05, B60G 17/052

(54) **LUFTFEDER-DÄMPFEREINHEIT**
PNEUMATIC SPRING SHOCK ABSORBER UNIT
UNITE D'AMORTISSEMENT A RESSORT PNEUMATIQUE

(30) Priorität: 11.12.2004 DE 102004059764
(43) Veröffentlichungstag der Anmeldung: 12.09.2007
(73) Patentinhaber: Continental Teves AG & Co. OHG, 60488 Frankfurt (DE)
(72) Erfinder: BEHMENBURG, Christof, 31867 Lauenau (DE); JOB, Heinz, 31535 Neustadt (DE); GLEU, Jens-Uwe, 30855 Langenhagen (DE); HILGERS, Christian, 30916 Isernhagen NWB (DE)
(86) Internationale Anmeldenummer: PCT/EP2005/012476
(87) Internationale Veröffentlichungsnummer: WO 2006/061098

(56) Entgegenhaltungen:
- DE-A1- 10 050 028
- DE-A1- 10 224 869
- DE-A1-102004 059 765
- DE-B3- 10 224 868
- DE-B3- 10 311 263
- FR-A- 1 299 215
- US-A- 3 046 003
- US-A1- 2003 066 405
- US-A1- 2004 201 146

## Beschreibung

Die Erfindung betrifft eine Luftfeder- und Dämpfereinheit, insbesondere für Fahrwerke von Fahrzeugen, welche zwischen Karosserie und Fahrwerk angeordnet ist und zwei mit Druckluft gefüllte Arbeitsräume aufweist, bei der die Arbeitsräume jeweils mindestens teilweise durch bewegliche Wände in Form von Roll- oder Faltenbälgen begrenzt werden und die Roll- oder Faltenbälge mindestens teilweise auf den Konturen rotationssymmetrischer Körper abrollen (Abrollkonturen), vorzugsweise auf als Zylinderflächen ausgebildeten Gehäuseteilen, wobei die Arbeitsräume übereinander angeordnet und untereinander über durchströmbare Drosselventile verbunden sind, und bei der sich beim Einfedern in Hauptbelastungsrichtung das Volumen eines Arbeitsraumes verringert und das Volumen des anderen Arbeitsraumes sich vergrößert oder unverändert bleibt. Beide Arbeitsräume sind innerhalb eines gemeinsamen topfförmigen rotationssymetrischen Gehäuses angeordnet. Eine solche Luftfeder- und Dämpfereinheit ist aus der DE-A-10 224 868 bekannt.

Die DE 103 11 263 B3 2004.07.29 zeigt eine Luftfeder mit Luftdämpfung, wobei zwei Arbeitskammern und drei Rollbälge vorgesehen sind. Der im Durchmesser größte Rollbalg bestimmt hierbei die Federrate der Luftfeder über den Federweg und ist angeordnet zwischen einem oberen und einem unteren topfförmigen Gehäuseteil. Die beiden weiteren und sich in ihrer wirksamen Federkraft kompensierenden Bälge sind zwischen dem unteren topfförmigen Gehäuseteil und einem Abrollrohr angeordnet, welches innerhalb des oberen topfförmigen Gehäuseteil befestigt ist und in den unteren topfförmigen Gehäuseteil hineinragt. Über Drosselbohrungen in den zylindrischen Wänden des Abrollrohres kann Luft zwischen beiden Arbeitsräumen strömen. Die beiden unteren spiegelbildlich angeordneten Bälge erlauben in dieser Ausbildung eine axiale Führung der Luftfeder, wodurch die Reibung während des Federhubes weitgehend reduziert wird. Bei diesem System wird jedoch beim Einfedern das Volumen beider Arbeitskammern verkleinert und beim Ausfedern wieder vergrößert. Durch das Verkleinern beider Volumina beim Einfedern steigt zwar in beiden Arbeitskammern der Druck und damit die Gasdichte an, nachteiligerweise aber nicht der dynamischen Differenzdrucks an den Drosselventilen. Dies wiederum bewirkt einen auch bei höherem Druck nur geringfügig gesteigerten Energieumsatz, d.h. relativ wenig Dissipation und damit geringere Dämpfungsarbeit.

Die US 5,180,145 offenbart einen insbesondere mit einer elektrorheologischen Flüssigkeit arbeitenden Dämpfer mit einem oberen und einem unteren Arbeitsraum, die jeweils teilweise durch Rollbälge begrenzt sind. Der Dämpfer läßt trotz verringerter Bauhöhe einen relativ großen Hub zu und ist ist in einer dort offenbarten Ausführungsform auch mit einer einfachen Luftfeder kombinierbar, deren einziger Arbeitsraum nach außen ebenfalls teilweise durch einen Rollbalg begrenzt wird. Die Kombination von mit jeweils unterschiedlichen Medien arbeitenden Dämpfern und Federn erhöht jedoch die Komplexität uns damit die Kosten des Bauteils. Zusätzlich birgt das Recycling von insbesondere elektrorheologischen Flüssigkeiten mögliche Probleme im Lifecycle-Management.

Die DE 3436664 A1 offenbart eine Membran-Luftfeder, welche ebenfalls Federung und Dämpfung bereitstellt und zwei unterschiedlich große Arbeitskammern aufweist, die jeweils teilweise durch Rollbälge nach außen begrenzt sind. Die Rollbälge stützen sich und rollen dabei auf äußeren Zylinderflächen axial beweglicher und als Hohlkolben ausgebildeter Gehäuseteile ab. Die unterschiedlich großen Arbeitskammern sind durch eine mit Drosselöffnungen versehene Wand getrennt, Durch die Drosselöffnungen kann Luft von einer Arbeitskammer in die andere strömen, wobei die entstehende Dissipation die Dämpfungsarbeit erzeugt. Die Membran-Luftfeder ist jedoch in ihrer Grundkonstruktion, bei der die als Hohlkolben ausgebildeten Gehäuseteile mit einer in der Trennwand geführten zentralen Stange verbunden sind, mit erheblichen Reibungsverlusten in dieser Führung behaftet. Hierdurch wird u.a. eine Mindestkraft erforderlich, die erreicht werden muß, um das Feder-Dämpfer-System überhaupt anspringen zu lassen. Unterhalb einer solchen Mindestkraft werden alle Schwingungen ungedämpft und ungefedert übertragen. Eine weitere dort gezeigte Ausführung, bei der die starre und in der Trennwand geführte Verbindungsstange durch einen äußeren Rahmen ersetzt wird, ist durch ihre Baugröße in kardanischen Aufhängungen insbesondere von Fahrzeugen kaum einsetzbar.

Die OS DE 24 06 835 offenbart eine Federungs- und Dämpfungsvorrichtung, bei der zwei Arbeitsräume, nämlich ein Dämpferraum und ein Federungsraum, über Drosselventile miteinander verbunden sind. Beide Arbeitsräume sind mindestens teilweise durch bewegliche Wände in Form von Faltenbälgen oder Rollbälgen begrenzt und können daher unterschiedliche Volumina annehmen. Im Gegensatz zu der in der DE 103 11 263 B3 2004.07.29 offenbarten Luftfeder wird hier beim Einfedern das Volumen des Federungsraumes verkleinert und das Volumen des Dämpferraumes vergrößert, beim Ausfedern jeweils umgekehrt. Einem solchen System ist inhärent, dass sich die Dämpfungswirkung /Dämpfungsarbeit mit steigender Last erhöht, während eine normale hydraulische Dämpfung auf nur eine Laststufe ausgelegt ist und sich bei z.B. Erhöhung der Last gravierend verändert (erniedrigt). Erhöht sich jedoch bei der in der OS DE 24 06 835 offenbarten Federungs- und Dämpfungsvorrichtung die Last, so steigt der Gasdruck im Federungsraum und im Dämpfungsraum und führt aufgrund der damit verbundenen Erhöhung der Gasdichte zur Vergrößerung des dynamischen Differenzdrucks an den Drosselventilen. Dies wiederum bewirkt einen vergrößerten Energieumsatz, d.h.eine erhöhte Dissipation und damit größere Dämpfungsarbeit. Nachteilig ist auch hier eine merkbare Reibung im System aller gezeigten Ausführungsarten, wodurch u.a. eine Mindestkraft zur Aktivierung des Feder-Dämpfer-Systems erforderlich wird.

Die DE 101 15 980 offenbart eine Gasfeder-Dämpfer-Einheit mit einem in einem Zylindergehäuse verschiebbaren und gegenüber letzterem abgedichteten Kolben, der zwei Arbeitsräume unterteilt. Dabei wird der auf der Kolbenvorderseite liegende Federungsraum bzw. Federdämpferraum beim Einfedern verkleinert. Der auf der Kolbenrückseite befindliche und die Kolbenstange beinhaltende Dämpferraum wird beim Einfedern vergrößert und umgekehrt. Der Dämpferraum ist teilweise von einem Rollbalg nach außen begrenzt. Die im Kolben befindlichen Drosselventile sind dabei so gestaltet, dass abhängig von der Durchströmungsrichtung ein unterschiedlicher Strömungswiderstand vorhanden ist und der Ort des Umschlags von laminarer in turbulente Strömung angepasst wird. Auch hier ist durch die Führung des Kolbens im Zylinder das Problem der Reibung noch nicht zufriedenstellend gelöst.

Gleiches gilt für die im Hinblick auf die grundlegende Konstruktion ähnliche und in der DE 199 32 717 A1 offenbarte Einrichtung. Auch hier findet man eine Gasfeder-Dämpfer-Einheit mit einem in einem Zylindergehäuse verschiebbaren abgedichteten Kolben, der zwei Arbeitsräume unterteilt. Der auf der Kolbenvorderseite liegende Federungsraum bzw. Federdämpferraum wird beim Einfedern verkleinert, während der auf der Kolbenrückseite befindliche und die Kolbenstange beinhaltende Dämpferraum beim Einfedern vergrößert wird und umgekehrt. Der Dämpferraum ist teilweise von einem Rollbalg nach außen begrenzt. Die im Kolben befindlichen Drosselventile sind dabei als mit Federscheiben belastete Ventile gestaltet, wobei die Federscheiben und Ventilquerschnitte abhängig von der Durchströmungsrichtung ausgebildet sind.

Für die Erfindung bestand daher die Aufgabe, eine Luftfeder- und Dämpfereinheit bereitzustellen, deren Bauraum gering und z. B. auch für ein Personenkraftwagen geeignet ist, die ohne konstruktiven Mehraufwand in den Bauraum von herkömmlichen Federungs- und Dämpfungsvorrichtungen eingebaut 1werden kann, die keine - insbesondere keine trockene - Reibung aufweist, welche zu akustischen Problemen führen kann oder eine Mindestkraft zur Aktivierung des Feder-Dämpfer-Systems erfordert, und die schließlich mit nur einem Medium arbeitet und durch einfache Maßnahmen auf unterschiedliche Belastungsfälle ausgelegt werden kann.

Gelöst wird diese Aufgabe durch die Merkmale des Hauptanspruchs. Vorteilhafte Ausbildungen sind in den Unteransprüchen enthalten.

Dabei sind beide Arbeitsräume der erfindungsgemäßen Luftfeder- und Dämpfereinheit innerhalb eines gemeinsamen topfförmigen rotationssymmetrischen Gehäuses angeordnet und durch einen innerhalb des Gehäuses axial beweglichen und am Kopfende einer Kolbenstange befindlichen rotationssymmetrischen Kolben getrennt, sodass ein Arbeitsraum auf der Kolbenvorderseite angeordnet ist und der andere Arbeitsraum auf der Kolbenrückseite angeordnet ist und die Kolbenstange teilweise umgibt. Der Kolben und die Kolbenstange werden jeweils durch Rollbälge innerhalb des rotationssymmetrischen Gehäuses abgedichtet und geführt, und die Außenfläche des Kolbens und der Kolbenstange und die Innenfläche des Gehäuses sind jeweils mindestens teilweise als rotationssymmetrische Abrollkonturen ausgebildet.

Eine solche Luftfeder- und Dämpfereinheit weist auch bei hohen Belastungen eine geringe Baugröße auf und vermeidet durch das Abtrennen und Dichten des Kolbens und der Kolbenstange jeweils durch Rollbälge innerhalb des rotationssymmetrischen Gehäuses jede merkbare Reibung und sorgt für ein sofortiges und komfortables "Anspringen". Zusätzlich erlaubt die Anordnung innerhalb eines einzigen gemeinsamen topfförmigen und rotationssymmetrischen Gehäuses eine gegenüber rauhen Umgebungsbedingungen erleichterte Kapselung, z. B. mittels Faltenbälgen zwischen zylindrischem Gehäuse und Kolbenstange oder Anschlußpunkten.

Eine vorteilhafte Ausbildung besteht darin, dass zwischen Kolben und Gehäuse ein zur Kolbenvorderseite abdichtender erster Rollbalg sowie ein zur Kolbenrückseite abdichtender zweiter Rollbalg angeordnet ist, und dass zwischen Kolbenstange und Gehäuse ein vom Kolben beabstandeter dritter Rollbalg angeordnet ist.

Ein Ausbildung mit drei auf solche Art angeordneten Bälgen erlaubt eine präzise und sichere Führung des Kolbens und der Kolbenstange, also des z.B. mit dem Fahrwerk verbundenen Teils der Luftfeder- und Dämpfereinheit, innerhalb des topfförmigen zylindrischen Gehäuses, was dann mit der Karosserie verbunden ist. Hierdurch lassen sich auch auf die Luftfeder- und Dämpfereinheit einwirkende Querkräfte, d.h. Fahrwerkskräfte normal zur Achse der Luftfeder- und Dämpfereinheit übertragen, was mit üblichen Luftfeder-Dämpfungssystemen nur bedingt möglich ist.

Eine weitere vorteilhafte Ausbildung besteht darin, dass der die Kolbenvorderseite abdichtende erste Rollbalg zur Kolbenvorderseite geöffnet ist und dass der die Kolbenrückseite abdichtender zweite Rollbalg sowie der dritte Rollbalg zwischen Kolbenstange und rotationssymmetrischem Gehäuse zur Kolbenrückseite geöffnet sind. Bei einer solchen Ausführung sind also die am Kolben befindlichen Rollbälge spiegelbildlich zueinander angeordnet und nutzen mindestens teilweise dieselbe Abrollkontur auf der Kolbenaußenfläche, was wiederum die Baugröße wesentlich reduziert.

Eine weitere vorteilhafte Ausbildung besteht darin, dass der erste und der zweite Rollbalg gleiche wirksame Durchmesser aufweisen, wobei vorteilhafterweise deren wirksamer Durchmesser größer ist als der wirksame Durchmesser des dritten Rollbalges.

Betrachtet man die durch eine solche Anordnung der Rollbälge in der erfindungsgemäßen Luftfeder- und Dämpfereinheit entstehenden übereinander liegende Arbeitsräume und die durch die Rollbalg-Geometrie bestimmten "wirksamen Durchmesser", so werden im stationären Zustand, also bei statischer Belastung der Luftfeder- und Dämpfereinheit und Druckausgleich zwischen den beiden Arbeitskammern, der erste und der zweite sich am Kolben befindliche Rollbalg sich in ihrer Kraftrichtung und -größe im Wesentlichen kompensieren. Damit wird im Zusammenwirken der Bauteile die wirksame Tragfeder mit Hilfe des dritten Rollbalges gebildet und auch in ihrer Tragkraft durch den wirksamen Durchmesser des dritten Rallbalges bestimmt.

In guter Näherung ist also der auf der Kolbenrückseite gelegene und die Kolbenstange umgebende Arbeitsraum, der u.a. durch den zweiten und den dritten Rollbalg begrenzt wird, als "Federungsraum" anzusehen. Demgegenüber kann der auf der Kolbenvorderseite gelegene und u.a. durch den ersten Rollbalg begrenzte Arbeitsraum als "Dämpfungsraum" bezeichnet werden. Eine solche vereinfachende Unterteilung der Arbeitsräume in "Federungsraum" und "Dämpfungsraum" beschreibt jedoch nur die Hauptfunktionen bzw. wesentlichen Eigenschaften. Selbstverständlich weisen beide Arbeitsräume im dynamischen Zustand sowohl Federungs- als auch Dämpfungseigenschaften auf.

Bei der erfindungsgemäßen Luftfeder- und Dämpfereinheit verringert sich also beim Einfedern in Hauptbelastungsrichtung, nämlich in axialer Richtung der Luftfeder- und Dämpfereinheit, im Gegensatz zu den bisher bekannten Luftdämpfungssystemen das Volumen des Dämpfungsraumes, während - je nach konstruktiver Auslegung - das Volumen des Federungsraumes sich vergrößert oder unverändert bleibt.

Durch die so ausgebildeten Volumina und die für die Rollbälge wirksamen Durchmesser erzeugt man eine relativ zur Baugröße große Dämpfungsarbeit, bzw. erhält die Größe der gewünschten Dämpfungsarbeit bei verringertem Bauraum.

Eine weitere vorteilhafte Ausbildung besteht darin, dass die Außenfläche des rotationssymmetrischen Kolbens mindestens teilweise als Kegelmantel ausgebildet ist und der erste und der zweite Rollbalg unterschiedliche wirksame Durchmesser aufweisen. Besondere Vorteile ergeben sich, wenn die wirksamen Durchmesser des ersten und des zweiten Rollbalges jeweils größer sind als der wirksame Durchmesser des dritten Rollbalges. Durch die so entstehende und durch die unterschiedlichen wirksamen Durchmesser des ersten und zweiten Rollbalges gebildete Differenzfläche (Kreisringfläche) läßt sich eine auf den Kolben wirkende und in Kraftrichtung und -größe einstellbare Differenzkraft erzeugen, mit der es möglich ist, besonderen Belastungs- oder Geometrieanforderungen des Gesamtsystems zu entsprechen.

Dies läßt sich in vorteilhafter Weise dadurch realisieren, dass der wirksame Durchmesser des ersten Rollbalges kleiner ist als der wirksame Durchmesser des zweiten Rollbalges. Die damit entstehende Differenzkraft wirkt damit zusätzlich in Belastungrichtung, also entgegen der durch den dritten Rollbalg erzeugten Federungskraft, "zieht" den Kolben damit tiefer in das topfförmige zylindrische Gehäuse, und versucht, die Luftfeder- und Dämpfereinheit verkürzen. Dem läßt sich dann durch einen höheren Betriebsdruck oder durch eine Vergrößerung des dritten Rollbalges, also durch eine Vergrößerung des wirksamen Durchmessers des dritten Rollbalges entgegenwirken. Letzteres führt zu einem größeren Radius in der ständig bewegten Rollbalgfalte und damit zu eine erheblichen Verlängerung der Lebensdauer. Diese Ausbildung der Luftfeder- und Dämpfereinheit erlaubt also eine Vielzahl von konstruktiven Anpassungen und Freiheiten ohne die Baugröße zu verändern und unter größtmöglicher Nutzung des "Gleichteile-Prinzips", d.h. unter Nutzung möglichst vieler gleiche Bauteile für eine große Menge an Konstruktionsvarianten.

Eine weitere vorteilhafte Ausbildung besteht darin, dass das topfförmige rotationssymmetrische Gehäuse vorzugsweise im oberen Bereich karosseriefest und die Kolbenstange im unteren Bereich an einer Radaufhängung befestigbar sind. Hierdurch liegt insbesondere bei der Verwendung in Fahrwerken von Personenkraftwagen die Luftfeder- und Dämpfereinheit geschützt im Radhaus und paßt in der Vielzahl der Einbaufälle hervorragend in den vorgesehenen Bauraum (Package).

Eine weitere vorteilhafte Ausbildung besteht darin, dass die durchströmbaren Drosselventile als schalt- oder steuerbare Ventile ausgebildet und innerhalb des die Arbeitsräume trennenden rotationssymmetrischen Kolbens angeordnet sind. Insbesondere bei der Anwendung in Fahrwerken von Kraftwagen ist es wünschenswert, die Dämpfungsarbeit zu steuern bzw. zu regeln und somit in die gesamte Fahrzeugsteuerung mit einzubinden. In sicherheitskritischen Situationen, wie z. B bei einer Vollbremsung, kann dann eine regelbare Dämpfung der Vorder- und Hinterachse ein Antiblockiersystem (ABS) oder eine elektronische Stabilitätskontrolle (ESP) unterstützen.

Anhand eines Ausführungsbeispieles soll die Erfindung näher erläutert werden.

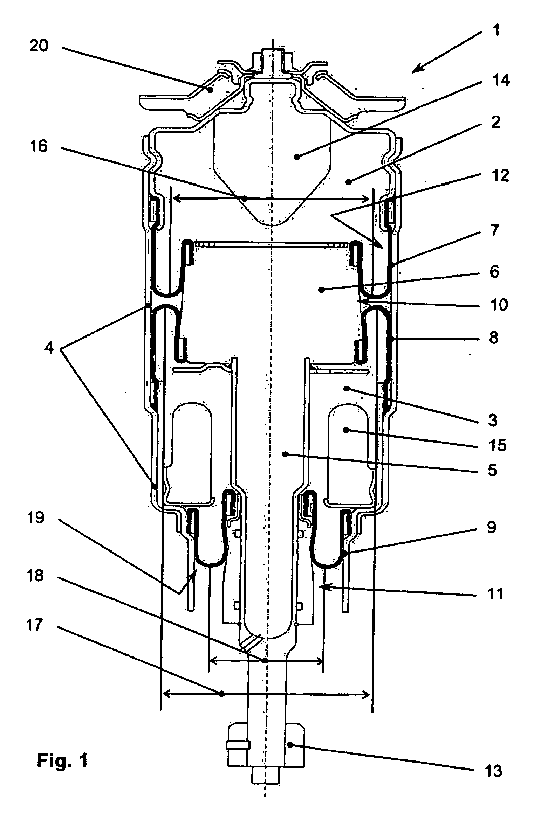

Die Fig. 1 zeigt eine erfindungsgemäße Luftfeder- und Dämpfereinheit 1 für ein Fahrwerk eines luftgefederten Personenkraftwagens. Die Luftfeder- und Dämpfereinheit weist zwei mit Druckluft gefüllte Arbeitsräume 2 und 3 auf. Die Druckluft wird über einen hier nicht näher dargestellten Kompressor, über zugehörige Ventile und Leitungen in bekannter Weise in die Arbeitsräume gefördert und kann ebenfalls über dieses System abgelassen werden. Üblicherweise besteht ein Luftfeder- oder Niveauregelsystem aus Druckluftanlage / Druckluftversorgung und vier Luftfedermodulen, nämlich für jedes Rad eines, und wird insgesamt über eine Steuerungseinrichtung geregelt.

Die Arbeitsräume 2 und 3 sind in einem gemeinsamen topfförmigen, hier zylindrische ausgebildeten Gehäuse 4 angeordnet und durch einen am Kopfende einer Kolbenstange 5 befindlichen, rotationssymmetrisch ausgebildeten Kolben 6 getrennt. Der Kolben 6 ist innerhalb des zylindrischen Gehäuses 4 axial beweglich. Innerhalb des Kolbens 6 sind hier nicht näher dargestellte steuerbare Drosselventile angeordnet, über die beiden Arbeitsräume 2 und 3 verbunden sind. Der Kolben 6 und die Kolbenstange 5 werden jeweils durch Rollbälge 7, 8 und 9 innerhalb des zylindrischen Gehäuses abgedichtet und geführt. Die Außenflächen 10 und 11 des Kolbens und der Kolbenstange sowie die Innenfläche 12 des Zylinders sind jeweils über einen für das Abrollen der Rollbälge erforderlichen Bereich als rotationssymmetrische Abrollkonturen ausgebildet.

Ein zwischen dem Ende des zylindrischen Gehäuses und dem unteren Anschlußpunkt 13 zum Fahrwerk befindlicher Faltenbalg zum Schutz gegen Umgebungsbedingungen ist hier nicht näher dargestellt.

Die Luftfeder- und Dämpfereinheit weist weiterhin federnd ausgebildete Anschläge 14 und 15 auf, die bei entsprechender Belastung in der Druck- oder in der Zugstufenendlage den Kolbenweg / Federweg begrenzen, damit kein metallischer Kontakt entsteht.

Die Außenfläche des rotationssymmetrischen Kolbens 6 ist als ein sich nach oben verjüngender Kegelmantel ausgebildet. Dadurch weisen der erste Rollbalg 7 und der zweite Rollbalg 8 unterschiedliche wirksame Durchmesser 16 und 17 auf, die jeweils größer sind als der wirksame Durchmesser 18 des dritten Rollbalges 9. Der wirksame Durchmesser des ersten Rollbalges 16 ist kleiner ist als der wirksame Durchmesser 17 des zweiten Rollbalges. Durch die unterschiedlichen wirksamen Durchmesser 16 und 17 entsteht eine Differenzfläche (Kreisringfläche), die eine auf den Kolben wirkende und nach oben gerichtete Differenzkraft erzeugt.

Die jeweils wirksamen Durchmesser werden dabei gebildet und beeinflußt durch das Zusammenspiel der gegenüberliegenden rotationssymmetrischen Konturen des Kolbens 6 und des Gehäuses 4.

Die Differenzkraft "zieht" den Kolben damit tiefer in das topfförmige Gehäuse. Der dritte Rollbalg 9 besitzt jedoch einen so groß ausgelegten wirksamen Durchmessers 18, dass die Differenzkraft zusätzlich zur statischen oder dynamischen Belastung aufgefangen werden kann. Damit besitzt der dritte Rollbalg 9 aber auch einen relativ großen Radius in der ständig bewegten Rollfalte 19 und damit eine sehr hohe Lastspielfestigkeit.

Karosserieseitg ist die Luftfeder- und Dämpfereinheit über ein Federbein-Kopflager 20 mit dem Fahrzeug in bekannter Weise verbunden.

### Bezugszeichenliste

### (Teil der Beschreibung)

- 1: Luftfeder- und Dämpfereinheit
- 2: Arbeitsraum (Dämpferraum)
- 3: Arbeitsraum (Federraum)
- 4: Zylindrisches Gehäuse
- 5: Kolbenstange
- 6: Kolben
- 7 - 9: Rollbalg
- 10 - 12: Fläche mit Abrollkontur
- 13: Anschlußpunkt
- 14, 15: Federnder Anschlag
- 16 - 18: Wirksamer Durchmesser
- 19: Rollfalte
- 20: Federbein-Kopflager

## Patentansprüche

1. Luftfeder- und Dämpfereinheit, insbesondere für Fahrwerke von Fahrzeugen, welche zwischen Karosserie und Fahrwerk angeordnet ist und zwei mit Druckluft gefüllte Arbeitsräume aufweist, bei der die Arbeitsräume jeweils mindestens teilweise durch bewegliche Wände in Form von Roll- oder Faltenbälgen begrenzt werden und die Roll- oder Faltenbälge mindestens teilweise auf den Konturen rotations-symmetrischer Körper abrollen, wobei die Arbeitsräume übereinander angeordnet und untereinander über durchströmbare Drosselventile verbunden sind, und bei der sich beim Einfedern in Hauptbelastungsrichtung das Volumen eines Arbeitsraumes verringert und das Volumen des anderen Arbeitsraumes sich vergrößert oder unverändert bleibt, wobei beide Arbeitsräume (2,3) innerhalb eines gemeinsamen topfförmigen rotationssymmetrischen Gehäuses (4) angeordnet, **dadurch gekennzeichnet, dass** beide Arbeitsräume (2,3) durch einen innerhalb des rotationssymmetrischen Gehäuses (4) axial beweglichen und am Kopfende einer Kolbenstange (5) befindlichen rotationssymmetrischen Kolben (6) getrennt sind, sodass ein Arbeitsraum (2) auf der Kolbenvorderseite angeordnet ist und der andere Arbeitsraum (3) auf der Kolbenrückseite angeordnet ist und die Kolbenstange (5) teilweise umgibt, dass der Kolben (6) und die Kolbenstange (5) jeweils durch Rollbälge (7, 8, 9) innerhalb des Gehäuses (4) abgedichtet und geführt werden, und dass die Außenfläche (10,11) des Kolbens (6) und der Kolbenstange (5) und die Innenfläche (12) des Gehäuses (4) jeweils mindestens teilweise als rotationssymmetrische Abrollkonturen ausgebildet sind.

2. Luftfeder- und Dämpfereinheit nach Anspruch 1, **dadurch gekennzeichnet, dass** zwischen Kolben (6) und rotationssymmetrischem Gehäuse (4) ein zur Kolbenvorderseite abdichtender erster Rollbalg (7) sowie ein zur Kolbenrückseite abdichtender zweiten Rollbalg (8) angeordnet ist, und dass zwischen Kolbenstange (5) und rotationssymmetrischem Gehäuse (4) ein vom Kolben (6) beabstandeter dritter Rollbalg (9) angeordnet ist.

3. Luftfeder- und Dämpfereinheit nach Anspruch 2, **dadurch gekennzeichnet, dass** der die Kolbenvorderseite abdichtende erste Rollbalg (7) zur Kolbenvorderseite geöffnet ist und dass der die Kolbenrückseite abdichtender zweite Rollbalg (8) sowie der dritte Rollbalg (9) zwischen Kolbenstange (5) und zylindrischem Gehäuse (4) zur Kolbenrückseite geöffnet sind.

4. Luftfeder- und Dämpfereinheit nach Anspruch 3, **dadurch gekennzeichnet, dass** der erste und der zweite Rollbalg (7, 8) im Wesentlichen gleiche wirksame Durchmesser (16, 17) aufweisen.

5. Luftfeder- und Dämpfereinheit nach Anspruch 3, **dadurch gekennzeichnet, dass** die Außenfläche des rotationssymmetrischen Kolbens (6) mindestens teilweise als Kegelmantel ausgebildet ist und der erste und der zweite Rollbalg (7, 8) unterschiedliche wirksame Durchmesser (16, 17) aufweisen.

6. Luftfeder- und Dämpfereinheit nach Anspruch 4 oder 5, **dadurch gekennzeichnet, dass** die wirksamen Durchmesser (16, 17) des ersten und zweiten Rollbalges (7, 8) jeweils größer sind als der wirksame Durchmesser (18) des dritten Rollbalges (9).

7. Luftfeder- und Dämpfereinheit nach Anspruch 5 oder 6, **dadurch gekennzeichnet, dass** der wirksame Durchmesser (16) des ersten Rollbalges (7) kleiner ist als der wirksame Durchmesser (17) des zweiten Rollbalges (8).

8. Luftfeder- und Dämpfereinheit nach Anspruch 1 bis 6, **dadurch gekennzeichnet, dass** das topfförmige rotationssymmetrische Gehäuse (4) vorzugsweise im oberen Bereich karosseriefest und die Kolbenstange (5) im unteren Bereich an einer Radaufhängung befestigbar sind.

9. Luftfeder- und Dämpfereinheit nach Anspruch 1 bis 7, **dadurch gekennzeichnet, dass** die durchströmbaren Drosselventile als schalt- oder steuerbare Ventile ausgebildet und innerhalb des die Arbeitsräume trennenden rotationssymmetrischen Kolben angeordnet sind.

## Claims

1. Pneumatic spring and damper unit, in particular for chassis of vehicles, which is arranged between the bodywork and chassis and has two working spaces filled with compressed air, in which the working spaces are each bounded at least partially by movable walls in the form of rolling bellows or corrugated bellows, and the rolling bellows or corrugated bellows roll at least partially on the contours of rotationally symmetrical elements, the working spaces being arranged one on top of the other and being connected to one another by means of throttle valves through which there can be a flow, and in which in the case of spring compression in the main load direction the volume of one working space is reduced and the volume of the other working space is increased or remains unchanged, wherein the two working spaces (2, 3) are arranged within a common, pot-shaped, rotationally symmetrical housing (4), **characterized in that** the two working spaces (2, 3) are separated by a rotationally symmetrical piston (6) which is axially movable within the rotationally symmetrical housing (4) and is located at the head end of a piston rod (5), with the result that a working space (2) is arranged on the front side of the piston and the other working space (3) is arranged on the rear side of the piston and partly surrounds the piston rod (5), **in that** the piston (6) and the piston rod (5) are each sealed and guided by rolling bellows (7, 8, 9) within the housing (4), and **in that** the external surface (10, 11) of the piston (6) and of the piston rod (5) and the internal surface (12) of the housing (4) are each formed at least partially as rotationally symmetrical rolling contours.

2. Pneumatic spring and damper unit according to Claim 1, **characterized in that** a first rolling bellows (7) which seals the front side of the piston and a second rolling bellows (8) which seals the rear side of the piston are arranged between the piston (6) and the rotationally symmetrical housing (4), and **in that** a third rolling bellows (9) which is spaced apart from the piston (6) is arranged between the piston rod (5) and the rotationally symmetrical housing (4).

3. Pneumatic spring and damper unit according to Claim 2, **characterized in that** the first rolling bellows (7) which seals the front side of the piston is opened to the front side of the piston, and **in that** the second rolling bellows (8), which seals the rear side of the piston, and the third rolling bellows (9) between the piston rod (5) and the cylindrical housing (4) are opened to the rear side of the piston.

4. Pneumatic spring and damper unit according to Claim 3, **characterized in that** the first and second rolling bellows (7, 8) have essentially the same effective diameters (16, 17).

5. Pneumatic spring and damper unit according to Claim 3, **characterized in that** the external surface of the rotationally symmetrical piston (6) is formed at least partially as a cone envelope, and the first and second rolling bellows (7, 8) have different effective diameters (16, 17).

6. Pneumatic spring and damper unit according to Claim 4 or 5, **characterized in that** the effective diameters (16, 17) of the first and second rolling bellows (7, 8) are each larger than the effective diameter (18) of the third rolling bellows (9).

7. Pneumatic spring and damper unit according to Claim 5 or 6, **characterized in that** the effective diameter (16) of the first rolling bellows (7) is smaller than the effective diameter (17) of the second rolling bellows (8).

8. Pneumatic spring and damper unit according to Claims 1 to 6, **characterized in that** the pot-shaped rotationally symmetrical housing (4) is preferably fixed to the vehicle body in the upper region, and the piston rod (5) can be attached to a wheel suspension in the lower region.

9. Pneumatic spring and damper unit according to Claims 1 to 7, **characterized in that** the throttle valves through which there can be a flow are embodied as switchable or controllable valves and are arranged within the rotationally symmetrical piston which separates the working spaces.

## Revendications

1. Unité de ressort et amortisseur pneumatique, en particulier pour train roulant de véhicules, qui est disposée entre la carrosserie et le train roulant et qui comprend deux chambres de travail remplies d'air comprimé, dans laquelle les chambres de travail sont respectivement limitées au moins en partie par des parois mobiles en forme de soufflets roulants ou pliants et les soufflets roulants ou pliants roulent au moins en partie sur les contours de corps à symétrie de rotation, dans laquelle les chambres de travail sont disposées l'une au-dessus de l'autre et sont reliées l'une à l'autre par des soupapes d'étranglement pouvant être traversées, et dans laquelle le volume d'une chambre de travail peut être réduit et le volume de l'autre chambre de travail augmente ou reste inchangé lors de l'enfoncement dans la direction de charge principale, les deux chambres de travail (2, 3) étant disposées à l'intérieur d'un boîtier commun (4), à symétrie de rotation et en forme de pot, **caractérisée en ce que** les deux chambres de travail (2, 3) sont séparées au moyen d'un piston (6) à symétrie de rotation, se trouvant à l'extrémité de tête d'une tige de piston (5) et mobile axialement à l'intérieur du boîtier (4) à symétrie de rotation, de telle manière qu'une chambre de travail (2) soit située sur le côté avant du piston et que l'autre chambre de travail (3) soit disposée sur le côté arrière du piston et entoure au moins en partie la tige de piston (5), **en ce que** le piston (6) et la tige de piston (5) sont respectivement guidés et rendus étanches à l'intérieur du boîtier (4) au moyen de soufflets roulants (7, 8, 9) et **en ce que** la face extérieure (10, 11) du piston (6) et de la tige de piston (5) et la face intérieure (12) du boîtier (4) sont réalisées respectivement au moins en partie par des contours de roulement à symétrie de rotation.

2. Unité de ressort et amortisseur pneumatique selon la revendication 1, **caractérisée en ce que** l'on dispose, entre le piston (6) et le boîtier (4) à symétrie de rotation, un premier soufflet roulant (7) réalisant l'étanchéité par rapport au côté avant du piston ainsi qu'un deuxième soufflet roulant (8) réalisant l'étanchéité par rapport au côté arrière du piston, et **en ce que** l'on dispose entre la tige de piston (5) et le boîtier (4) à symétrie de rotation un troisième soufflet roulant (9) espacé du piston (6).

3. Unité de ressort et amortisseur pneumatique selon la revendication 2, **caractérisée en ce que** le premier soufflet roulant (7) réalisant l'étanchéité par rapport au côté avant du piston est ouvert vers le côté avant du piston et **en ce que** le deuxième soufflet roulant (8) réalisant l'étanchéité par rapport au côté arrière du piston et le troisième soufflet roulant (9) entre la tige de piston (5) et le boîtier (4) cylindrique sont ouverts vers le côté arrière du piston.

4. Unité de ressort et amortisseur pneumatique selon la revendication 3, **caractérisée en ce que** le premier et le deuxième soufflets roulants (7, 8) présentent essentiellement le même diamètre utile (16, 17).

5. Unité de ressort et amortisseur pneumatique selon la revendication 3, **caractérisée en ce que** la face extérieure du piston (6) à symétrie de rotation est formée au moins en partie par une surface conique et le premier et le deuxième soufflets roulants (7, 8) présentent des diamètres utiles différents (16, 17).

6. Unité de ressort et amortisseur pneumatique selon la revendication 4 ou 5, **caractérisée en ce que** les diamètres utiles (16, 17) du premier et du deuxième soufflets roulants sont respectivement plus grands que le diamètre utile (18) du troisième soufflet roulant (9).

7. Unité de ressort et amortisseur pneumatique selon la revendication 5 ou 6, **caractérisée en ce que** le diamètre utile (16) du premier soufflet roulant (7) est plus petit que le diamètre utile (17) du deuxième soufflet roulant (8).

8. Unité de ressort et amortisseur pneumatique selon l'une quelconque des revendications 1 à 6, **caractérisée en ce que** le boîtier à symétrie de rotation et en forme de pot (4) est de préférence solidaire de la carrosserie dans sa région supérieure et la tige de piston (5) peut être fixée à une suspension de roue dans sa région inférieure.

9. Unité de ressort et amortisseur pneumatique selon l'une quelconque des revendications 1 à 7, **caractérisée en ce que** les soupapes d'étranglement pouvant être traversées sont des soupapes pouvant être commutées ou commandées et sont disposées à l'intérieur du piston à symétrie de rotation séparant les chambres de travail.
